Europäisches Patentamt

European Patent Office

Office européen des brevets

(19)

(11) Publication number: **0 211 823 B1**

# (12) EUROPEAN PATENT SPECIFICATION

(45) Date of publication of patent specification: **25.09.91**    (51) Int. Cl.⁵: **B23P 11/00**

(21) Application number: **84903853.4**

(22) Date of filing: **09.10.84**

(86) International application number:
**PCT/US84/01633**

(87) International publication number:
**WO 86/02303 (24.04.86 86/09)**

(54) **IMPROVED LOCKING RING AND STAPLING SYSTEM.**

(43) Date of publication of application:
**04.03.87 Bulletin 87/10**

(45) Publication of the grant of the patent:
**25.09.91 Bulletin 91/39**

(84) Designated Contracting States:
**FR**

(56) References cited:
**DE-A- 1 906 475        FR-A- 1 005 821
FR-A- 2 350 488        US-A- 2 404 110
US-A- 3 120 230        US-A- 3 840 947
US-A- 4 003 118        US-A- 4 099 298
US-A- 4 127 921        US-A- 4 261 098**

(73) Proprietor: **JENSEN, George William
P.O. Box 18233
Asheville, NC 28787(US)**

(72) Inventor: **JENSEN, George William
P.O. Box 18233
Asheville, NC 28787(US)**

(74) Representative: **Charlton, Peter John et al
ELKINGTON AND FIFE Beacon House 113
Kingsway
London WC2B 6PP(GB)**

**EP 0 211 823 B1**

## Description

This invention relates to an improved stapling system. More particularly it relates to a locking ring and apparatus for clinching such locking ring as defined in the pre-characterising portion of Claims 1 and 3 respectively.

A locking ring of conventional type according to the pre-characterising portion of Claim 1 is, for example, known from FR-A-1005821.

An example of an apparatus for clinching a locking ring of the type defined in the pre-characterising portion of Claim 3 is known from US-A-4003118.

Staples have long been used to joining two materials together. The staple normally consists of an open loop piece of metal. The loop is normally closed by the use of a staple gun, which includes a die at its end for bringing the free ends of the staple together or close together. An example of a prior art stapling system is shown in US-A-4,003,118 issued January 18, 1977, to Jensen. Another prior art staple system is shown in US-A-2,031,889 issued to Himberger. Both of these prior art patents show staples commonly referred to as hog rings wherein their free ends are brought into contact with one another.

While these two systems will work quite well for certain end uses, a need as arisen to provide a strong locking ring which will be adequate to hold wire screen together under high tension. A particular need is in the erosion control industry, where large metal baskets are formed using wire mesh. These baskets are filled with large rocks and placed in areas where erosion is prevalent. It has been shown that the above-described prior art staple systems simply are not adequate to hold these baskets together when in place. Currently these types of soil erosion baskets are manufactured using a very labour intensive method of hand-writing wire about the place on the basket to be joined.

It is one object of this invention to provide an improved stapling system.

It is another object to provide a locking ring which is capable of withstanding very high lateral forces.

It is another object to provide an apparatus for clinching the improved locking ring.

In accordance with one form of this invention there is provided a locking ring comprising: an open ring of material; said material of a type which imparts spring resilience to said ring; said ring having a center section of two substantially straight links and a pair of substantially straight portions forming arms extending from said center section and each having a free end; each free end being bent back toward its respective arm forming locking loops; said locking loops each forming a continuous arc of at least 120° but less than 360°; said arms not contacting one another while said ring is in the unlocked open condition; said arms adapted to be moved toward one another and said loops adapted to interlook with one another under, spring tension forming a closed locked ring; wherein said center section includes a first bend between the straight links forming a first angle of greater than 90° but less than 180°; a second bend forming a second angle of less than 90° located between said center section and one of said arms; a third bend forming a third angle of less than 90° located between said center section and the other of said arms; the sum of said first, second and third angles being greater than 180° but less than 360°; and each arm being in a different plane from the center section and each other.

In another form of this invention there is provided a staple gun for clinching an open ring having free ends which lie on differing planes prior to clinching, said gun comprising: a chamber for holding the ring while the ring is in its open condition; a die connected to said chamber for clinching the ring; means for forcing the ring from said chamber through said die and out of said gun; said die including a feed-through section; said feed-through section being open on its top, its bottom and its far end but closed on its opposing sides; wherein said sides each has a groove; each groove has top, bottom and side surfaces; each side surface is tapered inwardly in the direction of movement of the staple; and the top surface of each groove forms a different angle with respect to its side surface than said bottom surface of the same groove.

The invention together with further objects and advantages thereof can be better understood by reference to the following description of a preferred embodiment taken in conjunction with the accompanying drawings in which:

Figure 1 is a plan view of the locking ring of the subject invention in its open condition;

Figure 2 is a front elevation view of the locking ring of Figure 1;

Figure 3 is a plan view of the locking ring of Figure 1 after the locking ring has been clinched;

Figure 4 is a pictorial view of an apparatus for clinching the locking ring shown in Figure 1;

Figure 5 is a partial top view of the apparatus of Figure 4;

Figure 6 is a cross sectional view of a portion of the apparatus of Figure 5 taken along the lines 6-6.

Description of the Preferred Embodiment

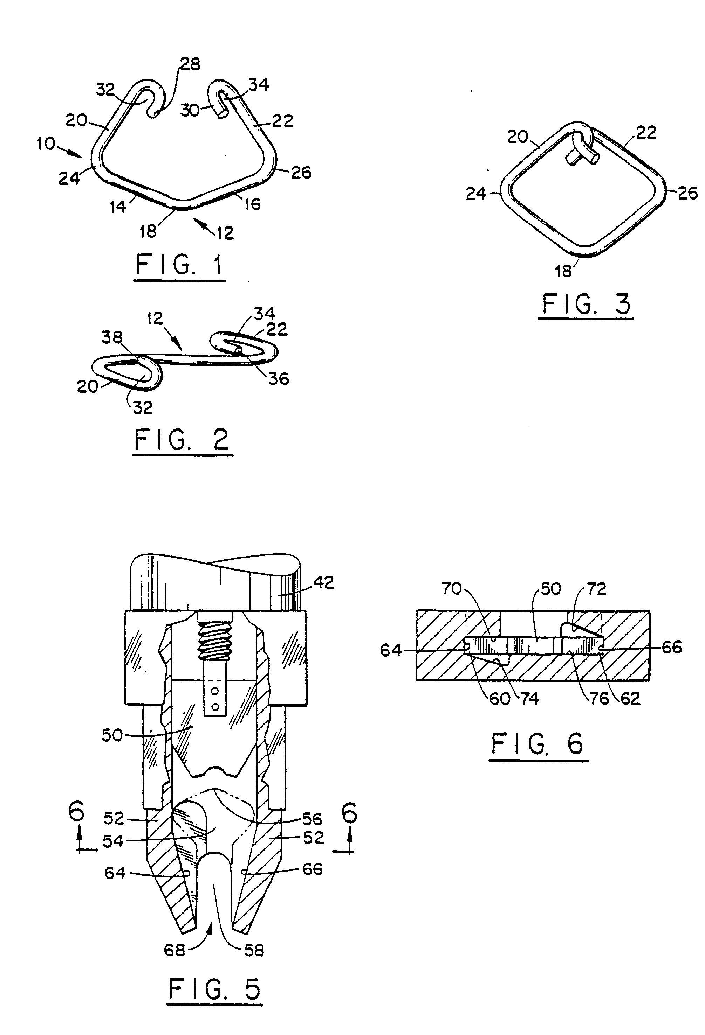

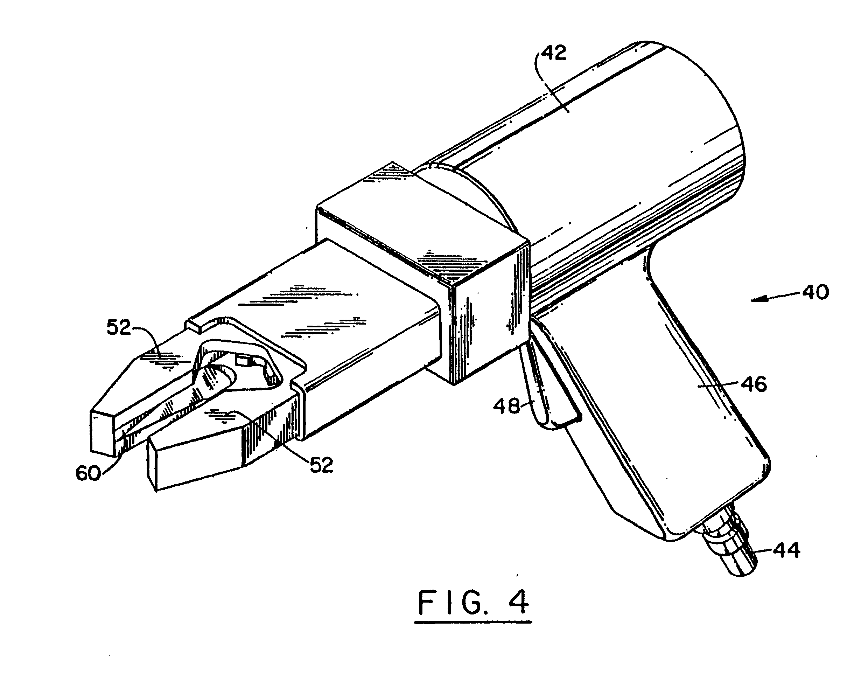

Referring now more particularly to Figure 1, locking ring 10 is shown in its open (unlocked or unclinched) condition. Locking ring 10 is normally made of a resilient metal, such as, for example, steel wire, capable of imparting spring forces. However, other materials may be used. Locking ring 10 includes center section 12, having links 14 and 16 which meet at vertex 18. The angle of this vertex 18 changes depending on whether or not the locking ring is in its clinched or unclinched condition. The other ends of the center section links meet arms 20 and 22 at bends 24 and 26. Bends 24 and 26 are normally the places where the materials to be locked or coupled together, such as wire screen, contact the ring. It is also the place where large lateral forces are normally applied by the wire that is to be coupled. The free ends 28 and 30 of arms 20 and 22 are bent back on their respective arms approximately, in this embodiment 180 degrees, forming locking loops 32 and 34. These locking loops 32 and 34 are adapted to interlock with one another as shown in Figure 3 by applying inward force at bends 24 and 26, thereby decreasing the angle of vertex 18.

Referring now to Figure 2 which is a front elevation view of the locking ring of Figure 1, as can be seen arm 22 and arm 20 are on different planes from center section 12 and, futhermore, are on different planes from one another. This feature is provided so that the locking loops may be readily interlocked with one another by merely applying inward force to bend 24 and 26. Once the locking loops have been intermated the loop is held in its closed condition as shown in Figure 3 by the spring forces imparted by the material on these locking loops in a direction away from one another. It should be noted in Figure 3 that the radius of curvature of the locking loops is smaller than the radius of curvature of the bends 24 and 26, as well as vertex 18. Therefore, when large forces are applied on bends 24 and 26 away from each other, the locking ring will tend to flatten out rather than release at the locking loops. The forces required to unlock or unclinch the locking ring will be much greater than the force required to open the aforementioned prior art hog ring. As the locking ring is flattened, making angles 24 and 26 approximately 0 degrees, the stress in the locking loop is transferred to the wire of the ring.

It should be noted in Figure 2 that the end 36 of loop 34 points downwardly and the end 38 of loop 32 points upwardly enhancing the ability of the locking loop to be clinched. Furthermore, after clinching the loops the locking loop arms 20 and 22 then are on the same plane. The geometric centers of the locking loops 32 and 34 are on the same plane as the center section 12 of the locking loops even prior to clinching.

Various types of staple guns may be used to clinch the locking ring described above; however, a gun specially designed for this locking ring has been developed as shown in Figure 4. Staple gun 40 may be of the type generally described in US-A-4,003,118 issued January 18, 1977, however, having a special die described below. Futhermore, this staple gun preferably uses a pneumatic piston system for clinching the locking ring. Staple gun 40 includes air cylinder 42 which is coupled through air input coupler 44. A valve is included (not shown) inside of handle 46 and is controlled by trigger 48. Staple ram 50 as shown in Figure 5 is connected to air cylinder 42 and is responsive thereto. Again referring to Figure 4, staple clinching die 52 is connected to the end of staple gun 40. Clinching die 52 is normally made of hardened steel and includes staple holding chamber 54, which receives the locking ring shown in Figure 1 with the center section 12 of the locking ring abutting against rear wall 56 of the die. Rear wall 56 is in a shape conforming generally to the center section of the locking ring prior to it being clinched.

Die 52 further includes opened section 58, which is adapted to receive the two pieces which are to be stapled or locked together such as, for example, two links of fence wire for forming a basket (not shown). As can be seen from Figure 4, die 52 includes groove 60 and as can be seen from Figure 6, groove 62. The side walls 64 and 66 of these respective grooves taper inwardly towards the open end of die 52. Bends 24 and 26 of the locking ring ride along these tapered walls 64 and 66 causing arms 20 and 22 to move toward one another and also causing the locking loops 32 and 34 to move towards one another and eventually link with one another as shown in Figure 2. This linking will occur near the end 68 of the die 52, thus circumscribing the two links of fence or basket wire.

As can be seen from the cross-sectional view of Figure 6, grooves 60 and 62 also include top and bottom walls which are mirror images of one another.

Top wall 70 forms a different angle with respect to its side wall 64 than does top wall 72 of groove 62 form with respect to its side wall 66. Bottom wall 74 also forms an angle differing from bottom wall 76 both as to their respective side walls. These differing angle to surfaces are formed to accommodate the shape of the locking ring 10, as shown in Figure 2, in that the arms 20 and 22 are on differing planes.

Ram 50 engages the rear portion of center section 12 and in response to pneumatic piston action from air cylinder 42 forces the locking ring through the die for clinching. This ram 50 travels through the center of die 52. The end of the ram 50 which makes contact with the locking ring may be somewhat curved to accommodate the shape of the center section of the locking ring and to provide stability.

From the foregoing description of the preferred embodiment of the invention, it is apparent that many modifications may be made therein. The scope of the invention is defined by the appended claims.

## Claims

1. A locking ring comprising: an open ring of material (10); said material of a type which imparts spring resilience to said ring; said ring having a center section (12) of two substantially straight links (14,16) and a pair of substantially straight portions forming arms (20,22) extending from said center section and each having a free end (28,30); each free end (28,30) being bent back toward its respective arm (20,22) forming locking loops (32,34); said locking loops each forming a continuous arc of at least 120° but less than 360°; said arms (20,22) not contacting one another while said ring is in the unlocked open condition; said arms (20,22) adapted to be moved toward one another and said loops (32,34) adapted to interlock with one another under spring tension forming a closed locked ring; characterized in that said center section (12) includes a first bend (18) between the straight links (14,16) forming a first angle of greater than 90° but less than 180°; a second bend (24) forming a second angle of less than 90° located between said center section (12) and one of said arms (20); a third bend (26) forming a third angle of less than 90° located between said center section (12) and the other of said arms (22); the sum of said first, second and third angles being greater than 180° but less than 360°; and each arm (20,22) being in a different plane from the center section and each other.

2. A locking ring as set forth in claim 1, wherein the radius of curvature of said interlocked loops (32,34) being smaller than any other radii of curvature within said ring.

3. A staple gun for clinching an open ring (10) having free ends (32,34) which lie on differing planes prior to clinching, said gun comprising: a chamber (54) for holding the ring while the ring is in its open condition; a die (52) connected to said chamber for clinching the ring; means (50) for forcing the ring from said chamber (54) through said die and out of said gun; said die (52) including a feed-through section; said feed-through section being open on its top, its bottom and its far end but closed on its opposing sides (64,66); characterized in that said sides each has a groove (60,62); each groove has top, bottom and side surfaces; each side surface (64,66) is tapered inwardly in the direction of movement of the staple; and the top surface (70,72) of each groove forms a different angle with respect to its side surface (64,66) than said bottom surface (74,76) of the same groove.

4. A staple gun as set forth in claim 3, wherein the top surface (70) of one (60) of the raised grooves forms an angle of approximately 90 degrees with respect to its side surface (64) and the bottom surface (76) of the other groove (62) forming an angle of approximately 90 degrees with respect to its side surface (66).

5. A staple gun as set forth in claim 3, wherein said means (50) for forcing the ring through said die is a pneumatically operated drive mechanism.

6. A staple gun as set forth in claim 3, wherein said grooves (60,62) have cross sections which are substantial mirror images of one another.

7. A staple gun as set forth in claim 3 in combination with a ring which is an open ring of material prior to passing through said die (52); said material of a type imparting spring resilience to said ring; said ring having a center section (12) and a pair of arms (20,22) extending from said center section; each arm having a free end (28,30); each free end being bend back towards its respective arm forming locking loops (32,34); said arms (20,22) adapted to be moved towards one another by said die and said loops (32,34) adapted to interlock with one another under spring tension to a closed locked ring.

## Revendications

1. Anneau d'agrafage comprenant un anneau (10) ouvert en une matière du genre qui donne une certaine élasticité à cet anneau, celui-ci comportant une partie centrale (12) composée de deux branches (14, 16) sensiblement rectilignes et deux parties sensiblement rectilignes qui forment les bras (20, 22) partant de cette partie centrale et présentant chacun une extrémité libre (28, 30), chacune de ces extrémités (28, 30) étant repliée sur son bras (20, 22) respectif en formant une boucle (32, 34) d'accrochage, chacune de ces boucles formant un arc continu d'au moins 120°, mais inférieur à 360°, lesdits bras (20, 22) ne se touchant pas lorsque l'anneau est ouvert et étant destinés à se rapprocher l'un de l'autre et les boucles (32, 34) étant destinées à s'accrocher l'une dans l'autre par traction élastique en formant un anneau agrafé fermé, anneau caractérisé en ce que ladite partie centrale (12) présente un premier coude (18) faisant un premier angle de plus de 90°, mais de moins de 180°, entre ses branches rectilignes (14, 16), un second coude (24) faisant un second angle de moins de 90°, entre ladite partie centrale (12) et l'un (20) des bras et un troisième coude (26) faisant un troisième angle de moins de 90° entre ladite partie centrale (12) et le second (22) desdits bras, la somme de ces premier, second et troisième angles étant supérieure à 180°, mais inférieure à 360°, et chaque bras (20, 22) étant dans un plan différent de celui de la partie centrale et de celui de l'autre bras.

2. Anneau d'agrafage selon la revendication 1, dans lequel le rayon de courbure desdites boucles (32, 34) accrochées l'une dans l'autre est inférieur à un autre rayon de courbure quelconque de l'anneau.

3. Pistolet agrafeur destiné à fermer un anneau (10) qui est ouvert et dont les extrémités libres (32, 34) se trouvent dans des plans différents avant la fermeture, ce pistolet comprenant

une chambre (54) destinée à contenir l'anneau pendant qu'il a sa configuration ouverte ; une matrice (52) reliée à cette chambre et destinée à fermer cet anneau ; des éléments (50) destinés à chasser ledit anneau de la chambre (54), à le repousser dans la matrice (52) et à l'éjecter du pistolet ; cette matrice (52) comportant une partie en forme d'auget, cette partie en auget étant ouverte en haut, en bas et à son extrémité de sortie, mais étant fermée sur ses côtés (64, 66) opposés ; caractérisé en ce que chacun de ces côtés comporte une rainure (60, 62) ; chaque rainure a des surfaces supérieure, inférieure et latérale ; chaque surface latérale (64, 66) est inclinée vers l'intérieur dans le sens du déplacement de l'agrafe ; et la surface supérieure (70, 72) de chaque rainure fait avec sa surface latérale (64, 66) un angle différent de celui de la surface inférieure (74, 76) de la même rainure.

4. Pistolet agrafeur selon la revendication 3, dans lequel la surface supérieure (70) de l'une (60) des rainures inclinées fait un angle d'environ 90° avec sa surface latérale (64), et la surface inférieure (76) de l'autre rainure (62) fait un angle d'environ 90° avec sa surface latérale (66).

5. Pistolet agrafeur selon la revendication 3, dans lequel les éléments (50) destinés à repousser l'anneau dans la matrice forment un mécanisme d'entraînement actionné pneumatiquement.

6. Pistolet agrafeur selon la revendication 3, dans lequel les rainures (60, 62) ont des sections droites constituant sensiblement l'image l'une de l'autre dans un miroir.

7. Pistolet agrafeur selon la revendication 3 en combinaison avec un anneau qui, avant de passer dans la matrice (52), est un anneau ouvert constitué d'une matière déterminée, cette matière étant d'un genre donnant une certaine élasticité à cet anneau ; celui-ci ayant une partie centrale (12) et deux bras (20, 22) partant de cette partie centrale, chaque bras ayant une extrémité libre (28, 30), chaque extrémité libre étant repliée sur son bras respectif en formant une boucle (32, 34) d'accrochage ; ces bras (20, 22) étant destinés à être rapprochés l'un de l'autre par la matrice (52) et les boucles (32, 34) étant destinées à s'accrocher l'une dans l'autre sous l'effet d'une traction élastique, en formant un anneau agrafé fermé.

**Patentansprüche**

1. Haltering mit: einem offenen Ring (10) aus Material; wobei das Material von einer Art ist, die dem Ring Federelastizität verleiht; der Ring einen Mittelabschnitt (12) aus zwei im wesentlichen geraden Stücken (14, 16) und zwei im wesentlichen geraden Abschnitten ·besteht, welche Arme (20, 22) bilden, die sich von dem Mittelabschnitt aus erstrecken und jeweils ein freies Ende (28, 30) aufweisen; jedes freie Ende (28, 30) zu seinem jeweiligen Arm (20, 22) unter Bildung von Verschlußschleifen (32, 34) zurückgebogen ist; jede der Verschlußschleifen einen kontinuierlichen Bogen von mindestens 120°, jedoch weniger als 360° beschreibt; die Arme (20, 22) sich im unverschlossenen offenen Zustand des Rings nicht berühren; die Arme (20, 22) aufeinander zu bewegbar sind und die Schleifen (32, 34) unter Federspannung miteinander verriegelbar sind, wobei sie einen geschlossenen verhakten Ring bilden; dadurch gekennzeichnet, daß der Mittelabschnitt (12) zwischen den geraden Stücken (14, 16) eine erste Biegung (18) aufweist, die einen ersten Winkel von mehr als 90°, jedoch weniger als 180° bildet; eine zweite Biegung (24), die einen zweiten Winkel von weniger als 90° bildet, zwischen dem Mittelabschnitt (12) und einem der Arme (20) angeordnet ist; eine dritte Biegung (26), die einen dritten Winkel von weniger als 90° bildet, zwischen dem Mittelabschnitt (12) und dem anderen der Arme (22) angeordnet ist; wobei die Summe aus erstem, zweitem und drittem Winkel größer als 180°, jedoch geringer als 360° ist; und wobei sich jeder Arm (20, 22) in einer Ebene befindet, die von derjenigen des Mittelabschnitts und des jeweils anderen Arms verschieden ist.

2. Haltering nach Anspruch 1, bei dem der Krümmungsradius der miteinander verhakten Schleifen (32, 34) kleiner ist als jeder andere Krümmungsradius des Rings.

3. Heftpistole zum Zusammenpressen eines offenen Rings (10) mit freien Enden (32, 34), die vor dem Zusammenpressen in verschiedenen Ebenen liegen, wobei die Pistole aufweist:

eine Kammer (54) zum Halten des Rings, während der Ring in seinem offenen Zustand ist; ein mit der Kammer verbundenes Werkzeug (52) zum Zusammenpressen des Rings; einer Einrichtung (50) zum Drücken des Rings aus der Kammer (54) durch das Werkzeug und aus der Pistole; das Werkzeug (52) einen Hindurchführungsabschnitt aufweist; wobei der Hindurchführungsabschnitt an seinem oberen und seinem unteren und an seinem entfernten Ende offen, jedoch an seinen gegenüberliegenden Seiten (64, 66) geschlossen ist; dadurch gekennzeichnet, daß jede dieser Seiten eine Nut (60, 62) aufweist; jede Nut eine obere Fläche, eine untere Fläche und Seitenflächen aufweist; jede Seitenfläche (64, 66) nach innen in Richtung der Bewegung der Klammer zuläuft; und die obere Fläche (70, 72) jeder Nut einen anderen Winkel mit ihrer Seitenfläche (64, 66) bildet als die untere Fläche (74, 76) derselben Nut.

4. Heftpistole nach Anspruch 3, bei der die obere Fläche (70) einer (60) der erhabenen Nuten einen Winkel von ungefähr 90° mit ihrer Seitenfläche (64) bildet, und die untere Fläche (76) der anderen Nut (62) einen Winkel von ungefähr 90° mit ihrere Seitenfläche (66) bildet.

5. Heftpistole nach Anspruch 3, bei der die Einrichtung (50) zum Drücken des Rings aus dem Werkzeug ein pneumatisch betriebener Antriebsmechanismus ist.

6. Heftpistole nach Anspruch 3, bei der die Nuten (60, 62) im wesentlichen zueinander spiegelbildliche Querschnitte aufweisen.

7. Heftpistole nach Anspruch 3, in Verbindung mit einem Ring, der vor dem Durchgang durch das Werkzeug (52) ein offener Ring aus Material ist; das Material von einer Art ist, die dem Ring Federelastizität verleiht; der Ring einen Mittelabschnitt (12) und zwei Arme (20, 22) aufweist, die sich von dem Mittelabschnitt aus erstrecken; jeder Arm ein freies Ende (28, 30) aufweist; jedes freie Ende zu seinem jeweiligen Arm unter Bildung von Verschlußschleifen (32, 34) zurückgebogen ist; die Arme (20, 22) durch das Werkzeug aufeinander zu bewegbar sind und die Schleifen (32, 34) unter Federspannung zu einem geschlossenen verhakten Ring miteinander verhakbar sind.

EP 0 211 823 B1

FIG. 1

FIG. 2

FIG. 3

FIG. 5

FIG. 6

FIG. 4

EP 0 211 823 B1